# DEMANDE DE BREVET EUROPEEN

(11) **EP 1 455 405 A2**
(43) Date de publication de la demande: **08.09.2004**
(21) Numéro de dépôt: 03291259.4
(22) Date de dépôt: 27.05.2003
(51) Int. Cl.: H01M 8/06, H01M 8/04, B60L 11/18

(54) **Système de traction à pile à combustible pour véhicule**

(30) Priorité: 27.05.2002 FR 0206410
(71) Demandeur: Renault s.a.s., 92100 Boulogne Billancourt (FR)
(72) Inventeur: Gérard, David, 75017 Paris (FR)

(57) **Abrégé**

Système de traction à pile à combustible, comprenant une pile à combustible principale 5, un réformeur 1 pour alimenter la pile à combustible principale 5 en hydrogène, une résistance électrique 3 de maintien en température du réformeur 1, une pile à combustible auxiliaire 6 connectée à ladite résistance 3 pour son alimentation électrique et un réservoir d'hydrogène 9 apte à alimenter la pile à combustible auxiliaire 6 et relié à une sortie du réformeur 1.

## Description

La présente invention concerne les systèmes de traction à pile à combustible de véhicules, notamment automobiles, utilisant un réformeur, et plus particulièrement les moyens de maintien en température du réformeur.

Il est connu d'utiliser pour la propulsion des véhicules, des moteurs électriques dont l'énergie électrique est fournie par une pile à combustible.

Une telle pile est alimentée en hydrogène et en oxygène qui se recombinent en eau, en produisant de la chaleur et une tension électrique entre les électrodes.

L'avantage de cette source d'énergie, par rapport aux batteries électriques classiques, est une autonomie supérieure pour un encombrement et une masse moindres.

Par rapport aux moteurs à explosion classiques, un avantage réside dans l'absence de rejets polluants.

Les piles à combustible consomment de l'hydrogène. Le stockage d'hydrogène à bord d'un véhicule sous une pression de l'ordre de 700 bars présente des dangers et requiert des réservoirs de masse élevée.

Ainsi, une solution intéressante consiste à fabriquer l'hydrogène sur place à partir d'un carburant facilement stockable dans le véhicule tel que le méthanol ou l'essence. Le carburant est transformé dans un réformeur qui produit de l'hydrogène utilisable dans la pile à combustible.

Toutefois, la durée de chauffage du réformeur nécessaire pour lui permettre de transformer le carburant dans de bonnes conditions et de produire de l'hydrogène, est non négligeable. Pendant cette période de chauffage, la production d'hydrogène pour la pile à combustible n'est pas assurée et le système de traction à pile à combustible ne peut pas fonctionner.

Plusieurs voies peuvent être envisagées alors:
- attendre la fin du chauffage du réformeur avant toute utilisation du véhicule risque de paraître inacceptable aux utilisateurs, surtout dans le cadre de l'utilisation quotidienne du véhicule, et de nuire à la commercialisation de tels véhicules ;
- prévoir un réservoir d'hydrogène pour alimenter la pile à combustible durant le chauffage du réformeur, solution décrite dans le document WO 00 39 873 qui s'avère volumineuse et s'intégrant mal dans un véhicule à pile à combustible ;
- utiliser une source auxiliaire de puissance pour maintenir en température le réformeur. Mais, compte tenu de la demande en énergie relativement élevée, par exemple 1,2 kWh pour un maintien en température de 12 heures, les sources classiques, telles que batteries ou supercapacités, ne sont guère adaptées. Une batterie suffisamment puissante sera volumineuse et chère. Une batterie doit être rechargée régulièrement et doit être prête dès le démarrage du véhicule, à répondre à une accélération quelconque, ce qui impose un fort dimensionnement de la batterie.

Le document FR-A-2 815 175 propose l'utilisation d'une pile auxiliaire alimentée en hydrogène, soit par un réservoir d'hydrogène auxiliaire, ou, préférablement, par un réformeur auxiliaire alimenté à partir d'un carburant classique, tel que le méthanol ou l'essence. Or, il ne s'avère guère souhaitable de disposer un réformeur auxiliaire dont le coût n'est pas négligeable, dans un véhicule.

La présente invention a pour but de remédier aux inconvénients de l'art antérieur.

La présente invention a pour but de proposer un moyen de maintien en température du réformeur qui soit économique et de fabrication simple.

Le système de traction à pile à combustible, selon un aspect de l'invention, comprend une pile à combustible principale, un réformeur pour alimenter la pile à combustible principale en hydrogène, une résistance électrique de maintien en température du réformeur, une pile à combustible auxiliaire connectée à la résistance pour son alimentation électrique et un réservoir d'hydrogène apte à alimenter la pile à combustible auxiliaire. Le réservoir d'hydrogène est relié à une sortie du réformeur. Le réservoir d'hydrogène peut ainsi être rechargé lors d'une période de fonctionnement du réformeur.

Avantageusement, le système comprend une vanne multi-voies disposée en sortie du réformeur et en amont de la pile à combustible principale et du réservoir d'hydrogène. La vanne multi-voies peut être de type pilotée par une unité de commande, de façon que la répartition de l'hydrogène produit par le réformeur entre la pile à combustible principale et le réservoir d'hydrogène soit effectuée de façon judicieuse.

Avantageusement, le système comprend une vanne multi-voies disposée en sortie du réservoir d'hydrogène et du réformeur et en amont de la pile à combustible auxiliaire. Dans certains cas, on peut ainsi alimenter la pile à combustible principale à partir du réservoir d'hydrogène.

Dans un mode de réalisation de l'invention, la pile à combustible auxiliaire est reliée à des organes consommateurs d'énergie électrique distincts de ladite résistance électrique. On met ainsi à profit la puissance de la pile à combustible auxiliaire pour alimenter les organes électriques dédiés par exemple à l'éclairage ou à la communication, ce qui permet de réserver toute la puissance de la pile à combustible principale à la traction du véhicule.

L'invention concerne également un véhicule comprenant un moteur électrique de traction et un système tel que décrit ci-dessus, pour alimenter ledit moteur en énergie électrique.

L'invention propose également un procédé dans lequel, dans un mode de fonctionnement, on alimente une pile à combustible principale en hydrogène à partir d'un réformeur et on alimente le réservoir d'hydrogène à partir du réformeur, dans un mode de maintien, on maintient en température le réformeur par une résistance électrique alimentée par une pile à combustible auxiliaire, elle-même alimentée par un réservoir d'hydrogène, dans un mode de démarrage, on alimente la pile à combustible principale en hydrogène à partir du réservoir d'hydrogène.

Avantageusement, dans le mode de fonctionnement, on alimente des organes consommateurs d'énergie électrique distincts de ladite résistance électrique à partir de la pile à combustible auxiliaire.

Dans un mode de réalisation de l'invention, si le réformeur est maintenu en température, on alimente la pile à combustible principale en hydrogène à partir du réformeur lors d'un démarrage.

Pour maintenir en température un réformeur permettant d'alimenter une pile de traction de véhicule d'environ 70 KW, il faut disposer d'une puissance d'environ 100 W. Cette puissance peut être délivrée par une petite pile à combustible, analogue à celles qui pourront être développées pour des applications portables. La pile à combustible auxiliaire permet de maintenir en température le réformeur pendant environ 12 heures, ce qui correspond à une utilisation quotidienne du véhicule, avec un trajet le matin et un autre trajet le soir.

Ainsi, dans le cas d'un arrêt de durée inférieure à 12 heures, la pile à combustible auxiliaire consommera en entrée de l'hydrogène provenant du réservoir, afin de permettre la génération de la puissance électrique de 100 W nécessaire au maintien en température du réformeur. Le réservoir d'hydrogène sera alimenté en hydrogène pendant le fonctionnement du réformeur.

Il convient donc de prévoir qu'en fonctionnement, le réformeur débite l'hydrogène suffisant pour que le moteur de traction puisse fonctionner, et doit également fournir une quantité supplémentaire d'hydrogène qui sera stockée dans le réservoir en vue du fonctionnement de la pile à combustible auxiliaire pendant l'arrêt du réformeur.

En variante, non exclusive, on peut prévoir que le réformeur continue de fonctionner après un arrêt du véhicule pour fournir l'hydrogène suffisant au réservoir d'hydrogène, afin d'assurer le fonctionnement de la pile à combustible auxiliaire et donc le maintien en température du réformeur.

La quantité d'hydrogène stockée dans un réservoir est de l'ordre de 65 g, ce qui détermine un volume de réservoir de l'ordre de 24 litres sous une pression de 30 bars. Le réservoir est de faible volume et de faible pression par rapport à un réservoir principal d'hydrogène d'un véhicule alimenté en hydrogène et non en carburant classique.

Pour un arrêt d'une durée supérieure à 12 heures, le réservoir d'hydrogène peut également servir à alimenter la pile à combustible principale, directement, pendant que le réformeur chauffe. L'alimentation de la pile à combustible principale est assurée de façon temporaire, par exemple environ 1 minute, par le réservoir d'hydrogène.

La durée d'une minute correspond, d'une part, à la durée nécessaire pour le chauffage du réformeur, et, d'autre part, à une durée raisonnable de fourniture d'hydrogène à une pile à combustible principale de traction par un réservoir d'hydrogène de faible volume.

En variante, on peut prévoir l'utilisation de la pile à combustible auxiliaire avec une puissance légèrement supérieure à 100 W pour d'autres éléments consommateurs d'énergie indispensables au fonctionnement du véhicule, mais ne nécessitant pas le démarrage et l'utilisation de la pile à combustible principale en raison de la faible puissance demandée.

Ainsi, il peut être intéressant de remplacer la batterie du véhicule par la pile à combustible auxiliaire, totalement ou en partie.

La pile à combustible auxiliaire peut être utilisée pour des applications de navigation, de communication telle qu'Internet, téléphonie, etc., ne consommant pas une énergie telle qu'il soit nécessaire de démarrer la pile à combustible principale.

La présente invention sera mieux comprise à l'étude de la description détaillée de deux modes de réalisation pris à titre d'exemples nullement limitatifs et illustrés par les dessins annexés, sur lesquels :
- la figure 1 est une vue schématique d'un système selon un mode de réalisation de l'invention ; et
- la figure 2 est une variante de la figure 1.

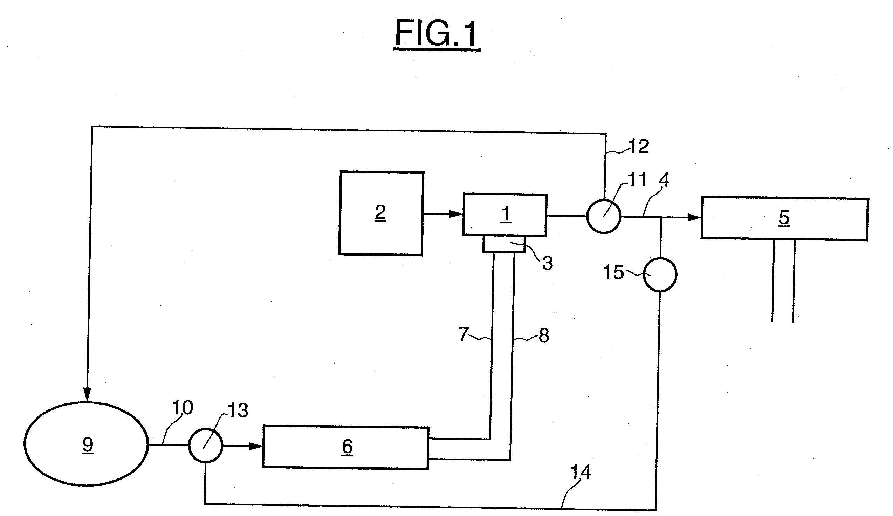

Sur la figure 1, le système comprend un réformeur 1 alimenté en carburant par un réservoir 2. Le carburant sera ici de type classique, par exemple méthanol ou essence. Le réformeur 1 est équipé d'une résistance électrique 3 pour son maintien en température et est apte à débiter de l'hydrogène dans une conduite de sortie 4, à laquelle est également reliée la pile à combustible principale 5, qui génère en sortie de l'énergie électrique. La résistance électrique 3 est connectée à une pile à combustible auxiliaire 6 par des conducteurs électriques 7 et 8. Un réservoir d'hydrogène 9 est relié par une conduite 10 à l'entrée de la pile auxiliaire 6.

En outre, une vanne trois voies 11 est montée sur la conduite 4 entre le réformeur 1 et la pile à combustible principale 5 et permet de dériver tout ou partie de l'hydrogène produit par le réformeur 1 vers le réservoir d'hydrogène 9 par une conduite 12.

Une vanne trois voies 13 est disposée sur la conduite 10 entre le réservoir d'hydrogène 9 et la pile auxiliaire 6 et permet d'envoyer de l'hydrogène en provenance du réservoir 9 vers la conduite 4 en aval de la vanne trois voies 11, en vue de l'alimentation de la pile à combustible principale 5 au moyen d'une conduite 14.

La conduite 14 est équipée d'une vanne 15 à proximité de sa jonction avec la conduite 4 afin d'éviter l'éventuelle remontée d'hydrogène de la conduite 4 vers la conduite 14.

Lors d'une phase de fonctionnement, lorsque le réformeur 1 est chaud, ledit réformeur 1 alimente la pile à combustible principale 5 en hydrogène pour alimenter en électricité la chaîne de traction, non représentée.

Le réformeur 1 alimente également durant cette phase le réservoir d'hydrogène 9, soit en continuant à fonctionner après l'arrêt de la pile à combustible 5, soit en fournissant un débit d'hydrogène supérieur au débit consommé par la pile à combustible principale 5.

Lors d'un arrêt de courte durée, par exemple inférieur à 12 heures, le réformeur 1 est maintenu en température par la résistance électrique 3 alimentée en électricité par la pile auxiliaire 6 par l'intermédiaire des conducteurs électriques 7 et 8, la pile auxiliaire 6 étant alimentée en hydrogène par le réservoir 9. On peut ainsi réutiliser le véhicule immédiatement sans attendre le réchauffage du réformeur pendant ladite durée.

En cas de durée d'arrêt importante, par exemple supérieure à 12 heures, le véhicule utilise directement l'hydrogène stocké à bord du réservoir 9 comme source d'énergie de la pile à combustible principale 5, le temps que le réformeur 1 soit chaud, avant de pouvoir utiliser son véhicule. Le réservoir d'hydrogène 9 fournit alors, de façon temporaire, pendant quelques dizaines de secondes ou quelques minutes, l'énergie des moteurs de traction, non représentés.

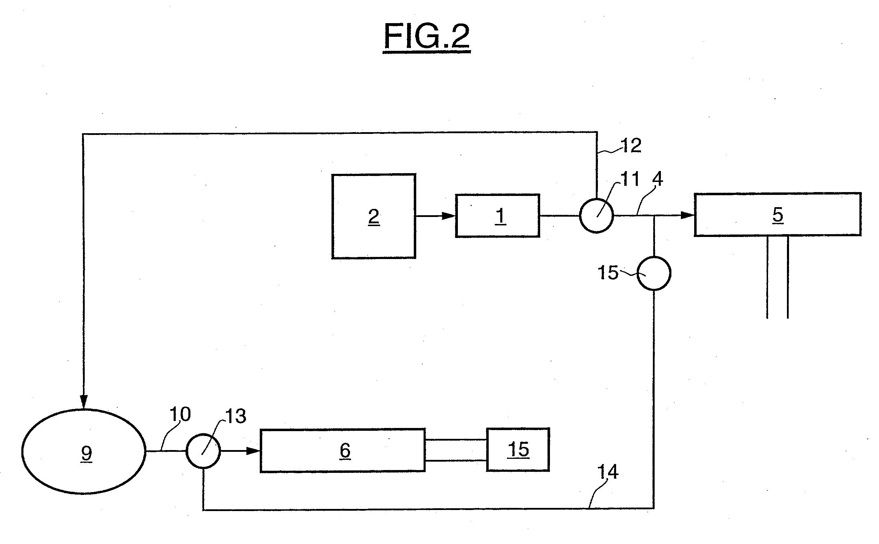

Sur la figure 2, est représentée une variante de la figure 1. Les références des éléments semblables ont été conservées. Le réformeur 1 est ici dépourvu de résistance électrique et les conducteurs 7 et 8 sont connectés à des organes auxiliaires 15 du véhicule. La pile auxiliaire 6 remplit alors la fonction que remplit habituellement une batterie dans un véhicule classique. Une telle application peut s'avérer intéressante en raison de la masse très importante d'une batterie.

Bien entendu, on comprendra que les deux variantes des figures 1 et 2 sont compatibles, en ce sens que l'on peut prévoir un système pourvu d'une résistance électrique 3 pour le maintien en température du réformeur et dont la pile auxiliaire 6 alimente également des organes auxiliaires du véhicule.

Il convient alors de dimensionner la pile auxiliaire 6 en conséquence.

L'invention offre un dispositif de maintien en température d'un réformeur de pile à combustible, d'architecture simple, économique, susceptible de recevoir d'autres applications, notamment de remplacer tout ou partie d'une batterie de stockage d'énergie électrique. La diminution de la taille de la batterie électrique est intéressante, en ce sens qu'elle permet de réduire le volume et surtout la masse de ladite batterie.

## Revendications

1. Système de traction à pile à combustible, comprenant une pile à combustible principale (5), un réformeur (1) pour alimenter la pile à combustible principale en hydrogène, une résistance électrique (3) de maintien en température du réformeur, une pile à combustible auxiliaire (6) connectée à ladite résistance pour son alimentation électrique et un réservoir d'hydrogène (9) apte à alimenter la pile à combustible auxiliaire, **caractérisé par le fait que** le réservoir d'hydrogène est relié à une sortie du réformeur.

2. Système selon la revendication 1, **caractérisé par le fait qu'**il comprend une vanne multi-voies (11) disposée en sortie du réformeur et en amont de la pile à combustible et du réservoir d'hydrogène.

3. Système selon la revendication 1 ou 2, **caractérisé par le fait qu'**il comprend une vanne multi-voies (13) disposée en sortie du réservoir d'hydrogène et du réformeur et en amont de la pile à combustible auxiliaire.

4. Système selon l'une quelconque des revendications précédentes, **caractérisé par le fait que** la pile à combustible auxiliaire est reliée à des organes consommateurs d'énergie électrique distincts de ladite résistance électrique.

5. Véhicule comprenant un moteur électrique de traction et un système selon l'une quelconque des revendications précédentes pour alimenter ledit moteur en énergie électrique.

6. Procédé dans lequel :
- dans un mode de fonctionnement, on alimente une pile à combustible principale en hydrogène à partir d'un réformeur, et on alimente un réservoir d'hydrogène à partir du réformeur,
- dans un mode de maintien, on maintient en température le réformeur par une résistance électrique alimentée par une pile à combustible auxiliaire elle même alimentée par le réservoir d'hydrogène,
- dans un mode de démarrage, on alimente la pile à combustible principale en hydrogène à partir du réservoir d'hydrogène.

7. Procédé selon la revendication 6, dans lequel dans le mode de fonctionnement, on alimente des organes consommateurs d'énergie électrique distincts de ladite résistance électrique à partir de la pile à combustible auxiliaire.

8. Procédé selon la revendication 6 ou 7, dans lequel si le réformeur est maintenu en température, on alimente la pile à combustible principale en hydrogène à partir du réformeur lors d'un démarrage.
